# EUROPÄISCHE PATENTSCHRIFT

(11) **EP 1 972 794 B1**
(45) Veröffentlichungstag und Bekanntmachung des Hinweises auf die Patenterteilung: **24.01.2018**
(21) Anmeldenummer: 08004892.9
(22) Anmeldetag: 15.03.2008
(51) Int. Cl.: F04D 19/04, F04D 29/063, F04D 29/059, F16C 33/66, F16N 7/12, F16C 33/38, F16C 33/41, F16C 33/62, F16N 7/36, F16C 19/06

(54) **Vakuumpumpe**
Vacuum pump
Pompe à vide

(30) Priorität: 23.03.2007 DE 102007014142
(43) Veröffentlichungstag der Anmeldung: 24.09.2008
(73) Patentinhaber: PFEIFFER VACUUM GMBH, 35614 Asslar (DE)
(72) Erfinder: Koci, Bernd, 35641 Schöffengrund (DE)
(74) Vertreter: Manitz Finsterwald Patentanwälte PartmbB

(56) Entgegenhaltungen:
- WO-A1-2006/131694
- DE-A1- 19 521 855
- DE-U1- 8 810 291
- JP-B- 3 681 811

## Beschreibung

Die Erfindung betrifft eine Vakuumpumpe nach dem Oberbegriff des ersten Anspruchs.

Zur Erzeugung von Vakua mit niedrigem absoluten Gasdruck werden seit Jahren erfolgreich Vakuumpumpen mit schnelldrehenden Rotoren eingesetzt. Besonders erfolgreich sind hierbei Vakuumpumpen nach Turbomolekular- oder Holweckbauart. Die Lagerung erfolgt dabei in der Regel mit Magnet- oder Wälzlagern. Trotz großer Fortschritte im Bezug auf den Herstellungspreis von Magnetlagern sind Wälzlager als Betriebslager noch immer nicht aus den Vakuumpumpen wegzudenken.

Wälzlager benötigen Schmiermittel, um eine möglichst lange Lebensdauer zu erreichen. Die Schmiermittelversorgung der Wälzlager kann in zwei Kategorien eingeteilt werden.

Zur ersten Kategorie gehören fettgeschmierte Wälzlager, bei denen das Schmiermittel in einer Matrix eingebettet ist und aus dieser in geringen Mengen abgegeben wird. Das Problem ist hier, dass das Fett in den meisten Anwendungen nur mit großem Aufwand ausgetauscht werden kann und die Vakuumpumpe daher mit der bei der Herstellung eingesetzten Fettmenge auskommen muss. Dies führt zu Nachteilen, beispielsweise reduziert sich die erreichbare Rotortemperatur, da die Wärme des Rotors im Wesentlichen über das Wälzlager wegtransportiert wird und so das Schmiermittel erhitzt wird. Da das Fett immer im Wälzlager verbleibt, besteht die Gefahr seiner Zerstörung durch hohe Temperaturen.

In die zweite Kategorie fallen Wälzlager, durch die ein Schmiermittelfluss hindurch geführt wird. Der Schmiermittelfluss kann bei größeren benötigten Mengen durch eine Schmiermittelpumpe oder bei kleineren Mengen durch Kapillarkräfte aufrecht erhalten werden. Eine solche Lagerung stellt die DE 10 2006 053 237 A1 vor. Obwohl die Lebensdauer der Vakuumpumpen mit Wälzlagern der zweiten Kategorie höher als die der ersten Kategorie ist, wird ein Verschleiß beobachtet, der höher als erwartet liegt.

Aus der WO 2006/131694 A1 ist eine Vakuumpumpe gemäß dem Oberbegriff des Anspruchs 1 bekannt.
Ferner beschreibt die JP 3 681811 B2 einen Käfig für ein Rollenlager eines Turboladers, welcher im Außenbereich gewindeartige Rillen zur Ölführung aufweist. Der Erfindung lag die Aufgabe zugrunde, die Lebensdauer einer Vakuumpumpe mit einem von wenigstens einem Wälzlager unterstützten schnelldrehendem Rotor zu erhöhen.

Gelöst wird diese Aufgabe durch eine Vakuumpumpe mit den Merkmalen des ersten Anspruchs. Die abhängigen Ansprüche 2 bis 9 geben vorteilhafte Weiterbildungen an.
Die Vakuumpumpe weist ein Wälzlager mit Innenring und Käfig auf, welcher eine gewindeartige Nut in einem dem Innenring zugewandten Abschnitt seiner Oberfläche aufweist. Diese Nut bewirkt eine gleichmäßige Schmiermittelförderung zwischen Innenring und Käfig in das Lagerinnere hinein. Dadurch wird verhindert, dass der Schmiermittelfluss abreißt. Außerdem bewirkt sie die Ausbildung eines beständigen Schmiermittelfilms zwischen Innenring und Käfig. Daher kann es nicht mehr zu einem direkten mechanischen Kontakt zwischen Käfig und Innenring kommen. Insgesamt wird in der Folge die Lebensdauer des Wälzlagers und damit der Vakuumpumpe erheblich verbessert. Der Käfig weist ferner eine konische Struktur auf, deren innere Oberfläche an den Abschnitt des Käfigs anschliesst, der die gewindeartige Nut aufweist. Dies verbessert den Schmiermittelzufluss zu der gewindeartigen Nut und trägt somit zur Lebensdauererhöhung bei. Vorteilhaft weitergebildet wird die Erfindung, indem das Wälzlager als Rillenkügellager gestaltet ist. Vakuumpumpen sollen nach Möglichkeit in verschiedenen Einbaulagen betrieben werden können. Hier sind Rillenkugellager von Vorteil, da sie eine axiale Last auf den Innenring aus beiden axialen Richtungen tragen können. In einer anderen Weiterbildung weist das Gewinde mehrere über den Umfang des Käfigs verteilte Gänge auf. Hierdurch sind Förderwirkung und Ausbildung des Schmiermittelfilms über den Umfang gleichmäßiger.

Weiterbildungen der Erfindung beziehen sich auf die Halterung des Wälzlagers in der Vakuumpumpe. Das Wälzlager muss schwingfähig gehaltert sein, so dass Schwingungen, die aufgrund von Rotorunwuchten entstehen, nicht direkt auf das Gehäuse der Vakuumpumpe übertragen werden. Ohne Schwingfähigkeit würden die Schwingungen des Rotors zu einer Schädigung des Wälzlagers führen. Die Flanschscheiben vergrößern die Auflagefläche für kompressible axiale Haltemittel, die beispielsweise als Elastomerscheiben ausgeführt sein können.
In einer Weiterbildung ist wenigstens eine der Flanschscheiben einstückig mit dem Außenring ausgebildet. Dies vermeidet Bewegung von Flanschscheibe und Außenring gegeneinander, die ihrerseits zu Materialabrieb und damit letztlich Verschmutzung des Schmiermittels führen würde. Eine Verschmutzung wiederum bedeutet eine Verkürzung der Lebensdauer.

In einer anderen Weiterbildung umfasst das Material des Wälzlagers stickstofflegierten martensitischen Stahl. Wälzlager mit diesem Materialbestandteil insbesondere im Bereich der Laufbahnen erweisen sich als sehr verschleißfest und korrosionsbeständig, so dass die Lebensdauer weiter erhöht wird.

Die vorgenannte Weiterbildung lässt sich besonders kostengünstig umsetzen, indem das Material lediglich eine an die Oberfläche angrenzende oder diese umfassende Randschicht druckstickstofflegierten martensitischen Stahl umfasst. Statt ein hochlegiertes Vollmaterial zu benutzen, wird ein günstigerer Ausgangsstahl genommen und dieser durch eine Nachbehandlung in einer Stickstoffatmosphäre gehärtet.

Die oben genannten Vorteile kommen besonders zur Geltung, wenn es sich bei der Vakuumpumpe um eine Turbomolekularvakuumpumpe handelt. Im Gegensatz zu anderen Vakuumpumpen sind hier die Drehzahlen und damit die Lagerbelastung besonders hoch, gleichzeitig die Menge des Schmiermittels aber so gering wie möglich.

Anhand eines Ausführungsbeispiels soll die Erfindung und ihre Weiterbildungen näher erläutert werden. Weitere Vorteile werden ebenfalls aufgezeigt. Es zeigen:

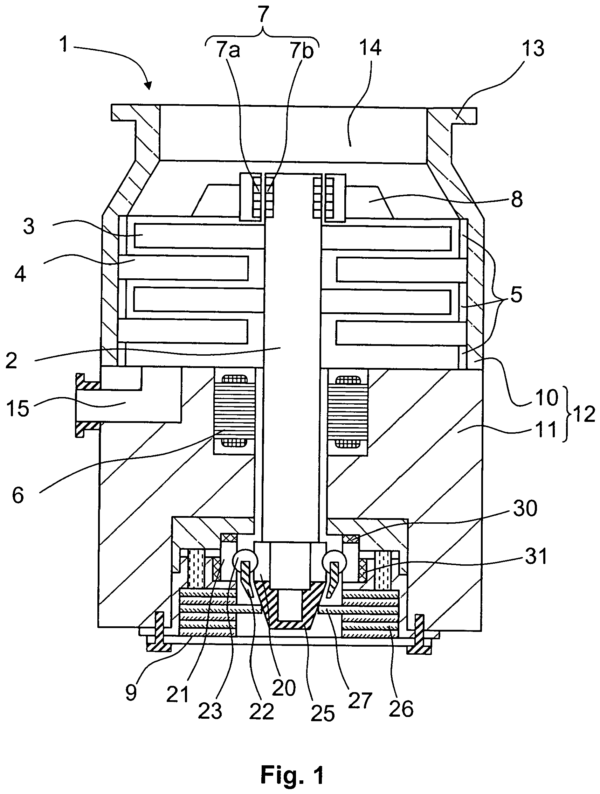

Fig. 1: : Senkrechter Schnitt durch eine Vakuumpumpe entlang der Wellenachse.
Fig. 2: : Schnitt durch ein Wälzlager.
Fig. 3: : Käfig eines Wälzlagers. a) mit eingängiger Nut, b) mit mehrgängiger Nut.
Fig. 4: : a) Schnitt durch den Innenring eines Wälzlagers, b) Qualitativer Verlauf der Stickstoffgehalts entlang der Linie A.

In den nachfolgenden Abbildungen bezeichnen gleiche Ziffern gleiche Teile.

In Fig. ist das Schnittbild durch eine Turbomolekularpumpe 1 gezeigt, im Folgenden Turbopumpe. Diese Turbopumpe weist ein Gehäuse 12 mit einem Oberteil 10, welches das Pumpsystem beinhaltet, und einem Unterteil 11 auf, welches unter anderem den Antrieb 6 beherbergt. Dieser Antrieb versetzt die Welle 2 in schnelle Drehung, die für Gasreibungspumpen und insbesondere Turbopumpen im Bereich von einigen zehntausend Umdrehungen pro Minute liegen. Auf der Welle sind Schaufeln tragende Rotorscheiben 3 befestigt. Diese sind auf der Welle beabstandet angeordnet. In den derart entstehenden Lücken befinden sich ebenfalls mit Schaufeln versehene Statorscheiben 4, welche durch Distanzringe 5 auf axialem Abstand gehalten und durch das Oberteil des Gehäuses zentriert werden. Das Pumpengehäuse weist ferner einen den Gaseinlass 14 umgebenden Flansch 13 auf, mit dem die Pumpe an einem Rezipienten lösbar befestigt werden kann. Das Gas wird vom Gaseinlass kommend durch die Rotor- und Statorscheiben gefördert und durch den Gasauslass 15 ausgestoßen. Ein Lagerhalter 8 ist vorgesehen, ein die Welle drehbar unterstützendes Lager zu haltern. Dieses Lager weist Permanentmagnete auf, die sich gegenüberstehend an einem Lagerstator 7a und einem Lagerrotor 7b angeordnet sind. Auf diese Weise wird ein permanentmagnetisches Lager 7 gebildet, welches je nach Raumlage der Turbopumpe Kräfte entlang der Wellenachse erzeugt. Die Wellenachse definiert im Folgenden die Richtung, die als axiale Richtung bezeichnet wird. Die radiale Richtung liegt dementsprechend senkrecht dazu. Die vom permanentmagnetischen Lager erzeugten Kräfte können in Richtung des Flansches 13, im Folgenden: nach oben, oder von ihm weg, im Folgenden: nach unten, gerichtet sein.

Am dem Flansch abgewandten Ende der Welle, nach den Definitionen das untere Ende, ist eine zweite Lageranordnung mit einem Wälzlager vorgesehen. Dieses umfasst einen Innenring 20, einen Außenring 21, einen Käfig 22 und in der Regel eine Mehrzahl von Wälzkörpern 23. Eine sogenannte Spritzmutter 25 fixiert den Innenring des Wälzlagers auf der Welle. Sie weist eine konische geformte Oberfläche auf, deren Durchmesser in Richtung des Wälzlagers zunimmt. Bei schneller Drehung der Welle wird dadurch Schmiermittel, welches sich auf der Oberfläche der Spritzmutter 25 befindet, in Richtung Lager gefördert. Das Schmiermittel gelangt im Beispiel über nasenförmige Strukturen 27 aus einem Schmiermittelspeicher 26 auf die Oberfläche der Spritzmutter. Für größere Schmiermittelmengen kann dieser Schmiermittelspeicher und die Förderung des Schmiermittels durch ein Reservoir und eine Schmiermittelpumpe ersetzt werden. Der Außenring des Wälzlagers ist durch einen oberen axialen Schwingring 30 in axialer und durch einen Radialschwingring 31 in radialer Richtung schwingfähig gehaltert. Der Lagerbereich ist durch einen Deckel 9 vakuumdicht verschlossen.

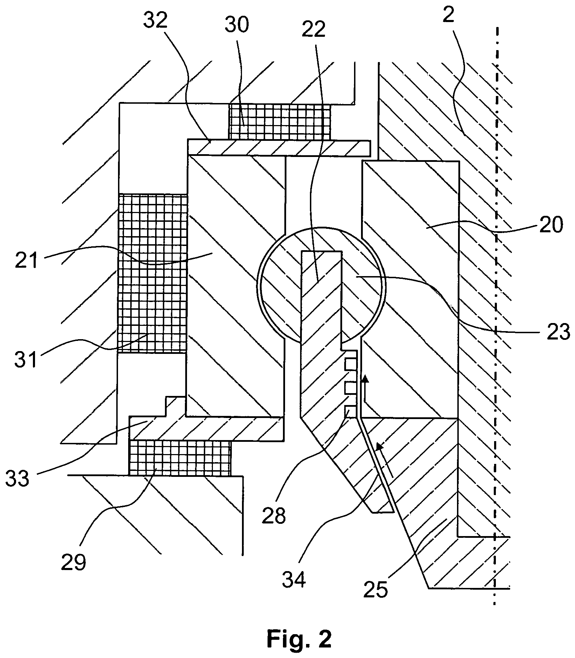

Das eingebaute Wälzlager ist in Fig. 2 detailliert dargestellt. Zwischen dem auf der Welle 2 durch die Spritzmutter 25 fixierten Innenring 20 und dem Außenring 21 sind Wälzkörper 23 angeordnet, die durch einen Käfig 22 entlang des Umfangs verteilt und auf definiertem Abstand gehalten werden. Ein Abschnitt der Oberfläche des Käfigs ist dem Innenring zugewandt. Auf diesem Abschnitt ist eine gewindeartige Nut 28 vorgesehen. Dieses Gewinde läuft auf der inneren Oberfläche des Käfigs entlang des Umfangs um. Die Gängigkeit des Gewindes ist so gewählt, dass durch Drehung des Käfigs eine Förderwirkung für Schmiermittel in Richtung des eingezeichneten Pfeils entsteht. Der Käfig weist einen Konus 34 auf, der eine Förderwirkung von Schmiermittel in Pfeilrichtung bewirkt. Schmiermittel wird durch Fliehkraftwirkung entlang der inneren Konusfläche auf die gewindeartige Nut hin gefördert. Eine obere Flanschscheibe 32 ist auf der der Nut abgewandten Stirnseite des Außenrings angeordnet.

Die Flanschscheiben 32 und 33 können lose in berührendem Kontakt mit dem Außenring stehen oder einzeln oder gemeinsam einstückig mit dem Außenring ausgeführt sein. Dies verhindert eine Relativbewegung von Flanschscheibe und Außenring im Falle von radialen Bewegungen des Außenrings. Diese Relativbewegungen würden zu Abrieb von Material und damit zur Verschmutzung des Schmiermittels führen. Verschmutzungen des Schmiermittels wiederum können zu einer Zerstörung des Lagers und damit letztlich der Turbopumpe führen. Ein erster Axialschwingring 30 ist zwischen der oberen Flanschscheibe und dem Pumpengehäuse angeordnet. Ein zweiter Axialschwingring 29 ist zwischen unterer Flanschscheibe 33 und Gehäuse angeordnet. Zwischen Außenring 21 und Gehäuse ist ein Radialschwingring 31 vorgesehen, so dass in der Summe der Außenring in alle Raumrichtungen schwingfähig gehaltert ist. Dies verringert die Übertragung von Schwingungen von Rotor auf Gehäuse und umgekehrt. Schwingungen müssen nicht im Wälzlager selbst abgefangen werden, so dass die Lebensdauer verlängert wird. Das Wälzlager kann vorteilhaft als Rillenkugellager ausgestaltet sein. Dies bedeutet, dass kugelförmige Wälzkörper in einer auf der inneren Oberfläche des Außenrings vorgesehen Rille umlaufen. Eine entsprechende Rille ist auf der äußeren Oberfläche des Innenrings vorgesehen. Beide Rillen bewirken zusammen, dass die Kugeln in beide axiale Richtungen bis auf ein geringes Spiel fixiert sind. Dadurch wird dieses Kugellager in beide axiale Richtungen belastbar. Dies ist gerade im Zusammenspiel mit einem Permanentmagnetlager vorteilhaft, da dieses bei kleinen Auslenkungen des Rotors eine zusätzliche Kraft in Richtung der Auslenkung erzeugt. Die Auslenkung kann je nach Einbaulage und Betriebsbedingungen in beide axiale Richtungen erfolgen.

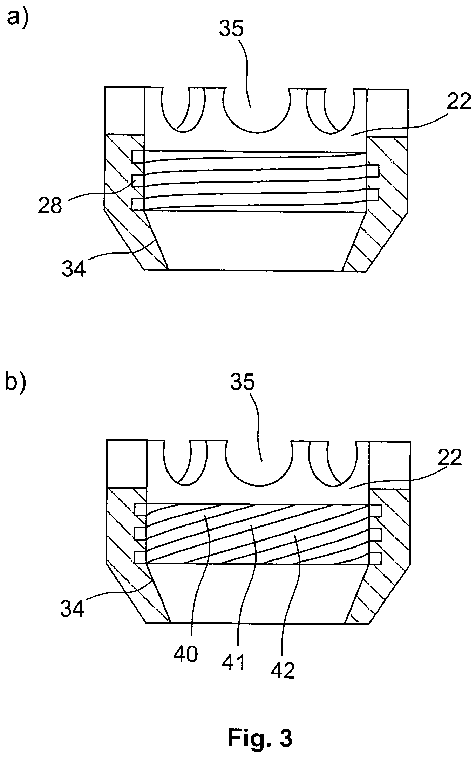

Möglichen Ausgestaltungen der gewindeartigen Nut sind in Fig. 3 dargestellt. In dieser Abbildung ist der Käfig 22 des Wälzlagers mit dem Konus 34 dargestellt. Im Teil a) der Abbildung ist eine einfache gewindeartige Nut 28 dargestellt, die auf der nach innen gewandten Oberfläche des Käfigs umläuft. Im Bereich dieser Nut wurde die Entstehung eines Schmierfilms beobachtet, welcher einen direkten mechanischen Kontakt von Käfig und Innenring verhindert. In Teil b) ist gezeigt, wie mehrere Nuten 40, 41 und 42 vorgesehen sind, so das ein Gewinde mit einer Mehrzahl von Gängen entsteht. Querschnitt und Tiefe können der Nuten können den Anforderungen an die Fördermenge und den Eigenschaften des Schmierfilms angepasst werden. In einer Weiterbildung umfasst das Material des Wälzlagers stickstofflegierten martensitischen Stahl. Wälzlager mit diesem Materialbestandteil insbesondere im Bereich der Laufbahnen erweisen sich als sehr verschleißfest und korrosionsbeständig, so dass die Lebensdauer weiter erhöht wird.

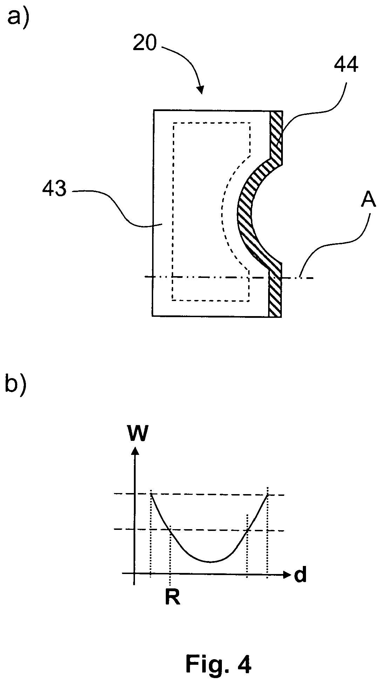

Eine vorteilhafte Weiterbildung der Materialwahl wird durch Fig. 4 veranschaulicht. In Teil a) ist ein Schnitt durch den Innenring 20 des Wälzlagers gezeigt. Eine geschlossene, gestrichelte Linie grenzt eine Randschicht vom Äußeren des Innenrings ab. Diese Randschicht grenzt an die Oberfläche an oder umfasst diese. Eine strichdoppeltpunktierte Linie A gibt die Stelle an, an der das Profil in Teil b) der Abbildung genommen ist. Dieses Profil gibt den Gewichtsanteil W an Stickstoff entlang der Tiefe d an. Der Stickstoffgehalt ist insbesondere in der Randschicht hoch und sinkt zum Inneren ab. Ab einer das Ende der Randschicht definierenden Tiefe unterschreitet der Stickstoffgehalt einen Wert von etwa 0,35 Gewichtsprozent. Diese Tiefe R liegt vorteilhaft in einem Bereich von wenigen Zehntel eines Millimeters. Der Stickstoffgehalt verbessert Oberflächenhärte und Korrosionsbeständigkeit. Wenn der Stickstoffgehalt nur in einer Randschicht hoch ist, kann ein preiswerter Ausgangsstahl genommen werden. Dessen Stickstoffgehalt wird dann insbesondere nahe seiner Oberfläche in einer Wärmebehandlung unter Stickstoffatmosphäre erhöht. Die Oberfläche des Wälzlagers kann zusätzlich zu dieser Behandlung eine Schicht 44 aufweisen. Diese kann insbesondere auf der inneren Oberfläche des Außenringes vorgesehen sein, welche in Berührung mit den Wälzkörpern gelangt. Die Schicht kann zusätzlich Härten oder eine schmierende Eigenschaft besitzen. Eine schmierende Schicht kann beispielsweise Molybdändisulfid enthalten.

Die vorgestellte Materialwahl und Beschichtung kann bei Innen- und Außenring oder bei einem der Ringe alleine angewendet werden. Vorteilhaft ist es, wenigstens denjenigen der Ringe gemäß Figur 4 zu gestalten, der sich in schneller Drehung befindet, da für diesen die Belastung am höchsten ist. In der vorgestellten Vakuumpumpe ist dies der Innenring des Wälzlagers.

## Patentansprüche

1. Vakuumpumpe (1) mit schnelldrehendem Rotor (2, 3), einem den Rotor (2, 3) drehbar unterstützenden Wälzlager, welches einen Innenring (20) und Außenring (21) aufweist, zwischen denen ein Käfig (22) und ein Wälzkörper (23) in einem durch den Innenring (20) und den Außenring (21) definierten Zwischenraum angeordnet sind,
**dadurch gekennzeichnet, dass**
der Käfig (22) eine gewindeartige Nut (28) in einem dem Innenring (20) zugewandten Abschnitt seiner Oberfläche aufweist, um eine kontinuierliche Förderung eines Schmiermittels zu dem Wälzkörper (23) zu gewährleisten, und dass der Käfig (22) eine konische Struktur (34) aufweist, deren innere Oberfläche an den Abschnitt des Käfigs (22) anschließt, der die gewindeartige Nut (28) aufweiset.

2. Vakuumpumpe (1) nach Anspruch 1,
**dadurch gekennzeichnet, dass**
das Wälzlager ein Rillenkugellager ist.

3. Vakuumpumpe (1) nach Anspruch 1 oder 2,
**dadurch gekennzeichnet, dass**
das Gewinde (28) eine Mehrzahl von Gängen aufweist.

4. Vakuumpumpe (1) nach einem der vorhergehenden Ansprüche,
**dadurch gekennzeichnet, dass**
eine erste Flanschscheibe (32) auf der der Nut (28) abgewandten Stirnseite des Außenringes (21) angeordnet ist.

5. Vakuumpumpe (1) nach einem der vorhergehenden Ansprüche,
**dadurch gekennzeichnet, dass**
eine zweite Flanschscheibe (33) auf der der Nut (28) zugewandten Stirnseite des Außenringes (21) angeordnet ist.

6. Vakuumpumpe (1) nach einem der vorhergehenden Ansprüche,
**dadurch gekennzeichnet, dass** wenigstens eine der Flanschscheiben (32, 33) einstückig mit dem Außenring (21) ausgebildet ist.

7. Vakuumpumpe (1) nach einem der vorhergehenden Ansprüche,
**dadurch gekennzeichnet, dass**
das Material des Wälzlagers stickstofflegierten martensitischen Stahl umfasst.

8. Vakuumpumpe (1) nach Anspruch 7,
**dadurch gekennzeichnet, dass**
das Material des Wälzlagers in einer an die Oberfläche grenzenden oder diese umfassenden Randschicht (44) druckstickstofflegierten martensitischen Stahl umfasst.

9. Vakuumpumpe (1) nach einem der vorhergehenden Ansprüche,
**dadurch gekennzeichnet, dass**
sie eine Turbomolekularvakuumpumpe ist.

## Claims

1. A vacuum pump (1) comprising a fast-rotating rotor (2, 3) and a rolling element bearing which rotatably supports the rotor (2, 3) and which has an inner race (20) and an outer race (21) between which a cage (22) and a rolling element (23) are arranged in an intermediate space defined by the inner race (20) and the outer race (21),
**characterized in that**
the cage (22) has a thread-like groove (28) in a section of its surface facing the inner race (20) to ensure a continuous conveying of a lubricant to the rolling element (23); and **in that** the cage (22) has a conical structure (34) whose inner surface adjoins the section of the cage (22) which has the thread-like groove (28).

2. A vacuum pump (1) in accordance with claim 1,
**characterized in that**
the rolling element bearing is a grooved ball bearing.

3. A vacuum pump (1) in accordance with claim 1 or claim 2,
**characterized in that**
the thread (28) has a plurality of turns.

4. A vacuum pump (1) in accordance with any one of the preceding claims,
**characterized in that**
a first flange disk (32) is arranged at the end face of the outer race (21) remote from the groove (28).

5. A vacuum pump (1) in accordance with any one of the preceding claims,
**characterized in that**
a second flange disk (33) is arranged at the end face of the outer race (21) facing the groove (28).

6. A vacuum pump (1) in accordance with any one of the preceding claims,
**characterized in that**
at least one of the flange disks (32, 33) is formed in one piece with the outer race (21).

7. A vacuum pump (1) in accordance with any one of the preceding claims,
**characterized in that**
the material of the rolling element bearing comprises nitrogen-alloyed martensitic steel.

8. A vacuum pump (1) in accordance with claim 7,
**characterized in that**
the material of the rolling element bearing comprises pressurized nitrogen-alloyed martensitic steel in a marginal layer (44) adjacent to the surface or encompassing it.

9. A vacuum pump (1) in accordance with any one of the preceding claims,
**characterized in that**
it is a turbomolecular vacuum pump.

## Revendications

1. Pompe à vide (1) comportant un rotor (2, 3) tournant rapidement, un palier de roulement pour soutenir en rotation le rotor (2, 3), qui comprend une bague intérieure (20) et une bague extérieure (21) entre lesquelles sont agencés une cage (22) et un corps de roulement (23) dans un intervalle défini par la bague intérieure (20) et la bague extérieure (21),
**caractérisée en ce que**
la cage (22) présente une rainure (28) de type taraudée dans une portion de sa surface tournée vers la bague intérieure (20), afin d'assurer un convoyage continu d'un lubrifiant vers le corps de roulement (23), et
**en ce que** la cage (22) présente une structure conique (34) dont la surface intérieure se raccorde à la portion de la cage (22) qui présente la rainure taraudée (28).

2. Pompe à vide (1) selon la revendication 1,
**caractérisée en ce que**
le palier de roulement est un palier rainuré à billes.

3. Pompe à vide (1) selon la revendication 1 ou 2,
**caractérisée en ce que**
le taraudage (28) présente une pluralité de spires.

4. Pompe à vide (1) selon l'une des revendications précédentes,
**caractérisée en ce que**
une première rondelle formant bride (32) est agencée sur la face frontale de la bague extérieure (21) détournée de la rainure (28).

5. Pompe à vide (1) selon l'une des revendications précédentes,
**caractérisée en ce que**
une seconde rondelle formant bride (33) est agencée sur la face frontale de la bague extérieure (21) tournée vers la rainure (28).

6. Pompe à vide (1) selon l'une des revendications précédentes,
**caractérisée en ce que**
l'une au moins des rondelles formant bride (32, 33) est réalisée d'un seul tenant avec la bague extérieure (21).

7. Pompe à vide (1) selon l'une des revendications précédentes,
**caractérisée en ce que**
le matériau du palier de roulement comprend un acier martensitique allié à l'azote.

8. Pompe à vide (1) selon la revendication 7,
**caractérisée en ce que**
dans une couche de bord (44) adjacente à la surface ou entourant celle-ci, le matériau du palier de roulement comprend un acier martensitique allié à l'azote sous pression.

9. Pompe à vide (1) selon l'une des revendications précédentes,
**caractérisée en ce que**
elle est une pompe à vide turbomoléculaire.
